# EUROPEAN PATENT APPLICATION

(11) **EP 4 847 564 A1**
(43) Date of publication of application: **02.12.2026**
(21) Application number: 24920284.7
(22) Date of filing: 23.10.2024
(51) Int. Cl.: C08L 83/06, C08G 77/14, C09D 183/06

(54) **ORGANOPOLYSILOXANE AQUEOUS DISPERSION, METHOD FOR PRODUCING ORGANOPOLYSILOXANE AQUEOUS DISPERSION, COATING AGENT, CURED OBJECT, AND COATED ARTICLE**

(30) Priority: 25.01.2024 JP 2024009150
(71) Applicant: SHIN-ETSU CHEMICAL CO., LTD., Tokyo 100-0005 (JP)
(72) Inventor: ASO, Fumihiro, Annaka-shi, Gunma 379-0224 (JP)
(74) Representative: Mewburn Ellis LLP
(86) International application number: PCT/JP2024/037747
(87) International publication number: WO 2025/158737

(57) **Abstract**

An organopolysiloxane aqueous dispersion containing
(A) an organopolysiloxane represented by formula (I) in an amount of 100 parts by mass,
(B) a basic compound in such an amount that the pH becomes 7-10, and
(C) water in an amount of 50-1000 parts by mass has high stability and excellent curability.

(SiO_{4/2})ₐ(R¹SiO_{3/2})_{b}(R²SiO_{3/2})_{c}(R¹₂SiO_{2/2})_{d}(R¹₃SiO_{1/2})ₑ(R³O_{1/2})_{f} (I)

(R¹ represents a hydrogen atom, a monovalent saturated hydrocarbon group, an organic group having a radically polymerizable functional group, an aryl group, or an aralkyl group; R² represents a monovalent group having a carboxylic anhydride structure, a carboxylic acid structure or a carboxylate structure; R³ represents a hydrogen atom, a methyl group, an ethyl group, a n-propyl group, or an isopropyl group; a, b, c, d, and e are numerical values satisfying the formulae 0 ≤ a < 1, 0 < b < 1, 0 < c ≤ 0.4, 0 ≤ d < 1, 0 ≤ e < 1, and a + b + c + d + e = 1; and f is a numerical value satisfying the formula 0 < f < 4.)

## Description

### TECHNICAL FIELD

This invention relates to an aqueous organopolysiloxane dispersion, method for preparing the same, coating agent, cured product, and coated article.

### BACKGROUND ART

Organopolysiloxane resins containing silanol groups are widely used in paints and coating agents. In general, the organopolysiloxane resins are such that when external energy, typically thermal energy is applied, terminal silanol groups react with each other to form a rigid siloxane network. Since the resulting coatings have excellent heat resistance and weather resistance, the coating agents find a wide range of application covering from outdoor buildings to automobile parts and electronic parts.

Despite the above advantage, the organopolysiloxane-based coating agents have the drawbacks that they must be diluted before use because the organopolysiloxane alone is a solid or high viscosity liquid and heating at high temperature is necessary for cure because the curing rate is slow.

To overcome these drawbacks, efforts were made in the prior art to examine the thin solvent dilution and water dispersions of organopolysiloxane resins and to enable low-temperature cure.

For example, Patent Document 1 describes a resin to be diluted with a solvent of TX solvent-free or environmental consideration in which conventional toluene/xylene (TX) solvents are replaced by acetate solvents. The resin is free of TX solvents and improved in cure.

In Patent Document 2, a water dispersion of a silicone resin is obtained by reacting a relatively low molecular weight organopolysiloxane with a cationic alkoxysilane. There are problems that the silicone resin is less curable and the cured coating has poor solvent resistance.

Patent Document 3 describes that a composition obtained by combining two or more organopolysiloxanes having different molecular weight and adding a catalyst cures at low temperatures of about 100°C. The catalyst is necessary for low-temperature cure, which brings about the drawback that the industrial implementation of the composition is difficult as viewed from pot life.

### PRIOR ART DOCUMENTS

### PATENT DOCUMENTS

Patent Document 1: JP-A 2021-172706
Patent Document 2: JP-A 2013-515154
Patent Document 3: JP-A 2021-172707

### SUMMARY OF INVENTION

### TECHNICAL PROBLEM

An object of the invention, which has been made under the above-mentioned circumstances, is to provide an aqueous organopolysiloxane dispersion having high stability and effective cure.

### SOLUTION TO PROBLEM

Making extensive investigations to attain the above object, the inventor has found that an aqueous organopolysiloxane dispersion containing an organopolysiloxane having a cyclic carboxylic anhydride structure or carboxylic acid structure resulting from ring-opening thereof, carboxylate structure, or carboxylic acid derivative structure and a basic compound and meeting a specific range of pH has a high dispersion stability and is curable at room temperature to form a cured film and that the cured film has improved solvent resistance. The invention is predicated on this finding.

The invention provides the following.
1. An aqueous organopolysiloxane dispersion comprising
   (A) 100 parts by weight of an organopolysiloxane having the formula (I),
   (B) a basic compound in an amount to adjust the dispersion at pH 7 to 10, and
   (C) 50 to 1,000 parts by weight of water,
   [Chem. 1]

   (SiO_{4/2})ₐ(R¹SiO_{3/2})_{b}(R²SiO_{3/2})_{c}(R¹₂SiO_{2/2})_{d}(R¹₃SiO_{1/2})ₑ(R³O_{1/2})_{f} (I)

   wherein R¹ is each independently hydrogen, or a C₁-C₁₂ monovalent saturated hydrocarbon group, C₂-C₁₂ organic group having a radically polymerizable functional group, C₆-C₁₈ aryl group or C₇-C₂₀ aralkyl group, which may be substituted with halogen, R² is each independently a monovalent group having a carboxylic anhydride, carboxylic acid or carboxylate structure, R³ is each independently hydrogen, methyl, ethyl, n-propyl or isopropyl, a, b, c, d, and e are numbers satisfying: 0 ≤ a < 1, 0 < b < 1, 0 < c ≤ 0.4, 0 ≤ d < 1, 0 ≤ e < 1, and a+b+c+d+e=1, and f is a number satisfying 0 < f < 4.
2. The aqueous organopolysiloxane dispersion of 1 wherein R² is a monovalent group having a succinic anhydride, succinic acid or succinate structure.
3. The aqueous organopolysiloxane dispersion of 1 wherein in formula (I), b, d and e satisfy 0.5 ≤ b < 1, 0 ≤ d < 0.5 and 0 ≤ e < 0.5.
4. The aqueous organopolysiloxane dispersion of 1 wherein component (A) has a weight average molecular weight (Mw) of 1,000 to 500,000 as measured by gel permeation chromatography versus polystyrene standards.
5. The aqueous organopolysiloxane dispersion of 1 wherein the basic compound as component (B) is an amine compound.
6. The aqueous organopolysiloxane dispersion of 1 wherein a surfactant is present in an amount of up to 1% by weight of the overall weight.
7. The aqueous organopolysiloxane dispersion of 1 wherein an organic solvent is present in an amount of up to 5% by weight of the overall weight.
8. A method for preparing the aqueous organopolysiloxane dispersion of any one of 1 to 7, the method comprising steps (α) to (y):
   step (α) of effecting co-hydrolytic condensation of a silane mixture containing a silane compound having the formula (III) or hydrolytic condensate thereof and a silane compound having the formula (IV) to form an organopolysiloxane having at least one of a cyclic carboxylic anhydride structure and a carboxylic acid structure resulting from ring-opening thereof,

      R¹Si(OR³)₃ (III)

      R⁴Si(OR³)₃ (IV)

      wherein R¹ and R³ are as defined above, R⁴ is each independently a monovalent group having a cyclic carboxylic anhydride structure,
   step (β) of mixing the organopolysiloxane having at least one of a cyclic carboxylic anhydride structure and a carboxylic acid structure resulting from ring-opening thereof, obtained in step (α), with a basic compound to form a mixture, and
   step (γ) of dispersing the mixture of step (β) in water to form the aqueous organopolysiloxane dispersion.
9. A curable silicone composition comprising the aqueous organopolysiloxane dispersion of any one of 1 to 7.
10. A coating agent comprising the aqueous organopolysiloxane dispersion of any one of 1 to 7.
11. A cured product of the curable silicone composition of 9.
12. A coated article comprising a substrate and the cured product of 11 formed on at least one surface of the substrate directly or via at least one other layer.

### ADVANTAGEOUS EFFECTS OF INVENTION

The aqueous organopolysiloxane dispersion has a high dispersion stability and effective cure, that is, rapidly cures at room temperature. The cured film has improved solvent resistance. The dispersion is best suited for the manufacture of various coated articles.

### DESCRIPTION OF EMBODIMENTS

Now the invention is described in detail.

### Aqueous organopolysiloxane dispersion

[1] The aqueous organopolysiloxane dispersion of the invention contains (A) an organopolysiloxane having the formula (I), (B) a basic compound, and (C) water and exhibits pH 7 to 10.

### (A) Organopolysiloxane

The organopolysiloxane as component (A) has the formula (I).
[Chem. 2]

(SiO_{4/2})ₐ(R¹SiO_{3/2})_{b}(R²SiO_{3/2})_{c}(R¹₂SiO_{2/2})_{d}(R¹₃SiO_{1/2})ₑ(R³O_{1/2})_{f} (I)

In formula (1), R¹ is each independently hydrogen, or a C₁-C₁₂ monovalent saturated hydrocarbon group, C₂-C₁₂ organic group having a radically polymerizable functional group, C₆-C₁₈ aryl group or C₇-C₂₀ aralkyl group, which may be substituted with halogen.

The C₁-C₁₂ monovalent saturated hydrocarbon group may be straight, branched or cyclic. Examples thereof include methyl, ethyl, n-propyl, isopropyl, n-butyl, isobutyl, tert-butyl, neopentyl, n-hexyl, cyclohexyl, n-heptyl and n-octyl. Of these, C₁-C₃ alkyl groups are preferred, with methyl and ethyl being more preferred.

Examples of the C₂-C₁₂ organic group having a radically polymerizable functional group include vinyl, allyl, 3-acryloyloxypropyl, and 3-methacryloyloxypropyl.

Examples of the C₆-C₁₈ aryl group include unsubstituted aryl groups such as phenyl and naphthyl, and alkylaryl groups such as tolyl, xylyl, ethylphenyl, propylphenyl, butylphenyl, pentylphenyl, hexylphenyl, heptylphenyl, octylphenyl, nonylphenyl, decylphenyl, undecylphenyl and dodecylphenyl. Phenyl is preferred.

Examples of the C₇-C₂₀ aralkyl group include benzyl and phenylethyl.

Notably, in the above-mentioned alkyl, organic, aryl and aralkyl groups, some or all of the hydrogen atoms may be substituted by halogen atoms such as fluorine, chlorine, bromine and iodine. Examples include chloromethyl, chloropropyl, bromoethyl, trifluoropropyl, chlorophenyl and bromophenyl.

In formula (I), R² is each independently a monovalent group having a carboxylic anhydride, carboxylic acid or carboxylate structure.

Examples of the carboxylic anhydride structure include succinic anhydride structure, maleic anhydride structure, phthalic anhydride structure, cyclopentanedicarboxylic anhydride structure, cyclohexanedicarboxylic anhydride structure, norbornanedicarboxylic anhydride structure, and norbornenedicarboxylic anhydride structure. Succinic anhydride structure is preferred.

Suitable carboxylic acid structures include hydrocarbon groups containing at least one carboxy group, preferably 1 to 4 carboxy groups, more preferably 2 carboxy groups. Preferred examples include succinic acid, maleic acid, phthalic acid, cyclopentanedicarboxylic acid, cyclohexanedicarboxylic acid, norbornanedicarboxylic acid, and norbornenedicarboxylic acid structures obtained from ring-opening of the aforementioned carboxylic anhydride structures. Succinic acid structure is preferred.

The monovalent group having a carboxylic acid structure may have an amide bond, urethane bond or urea bond. Exemplary of such group is a group of the following formula.

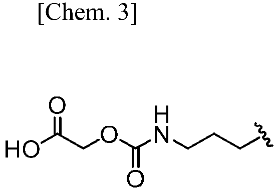

Herein the wavy line designates a point of attachment.

Suitable carboxylate structures include salts of a carboxy group in the aforementioned carboxylic acid structure with a basic compound (B) to be described later. In particular, salts of succinic acid structure with amine compounds are preferred.

The structure represented by R² may contain a carboxylic acid derivative structure resulting from reaction of carboxylic anhydride structure with an amine or alcohol, such as carboxylic amide or carboxylic ester.

R² is preferably a group having the formula (II).
[Chem. 4]

*-X-Z¹ (II)

Herein * designates a point of attachment to the silicon atom.

In formula (II), X is a C₁-C₄₀ straight or branched divalent hydrocarbon group which may contain oxygen, nitrogen, sulfur or silicon. Z¹ is a cyclic carboxylic anhydride structure or a carboxylic acid or carboxylate structure resulting from ring-opening thereof.

In the C₁-C₄₀ divalent hydrocarbon group X, an ether bond, amide bond, urethane bond, urea bond or sulfide bong may intervene. Preferred examples include C₁-C₁₀ alkylene groups and (poly)oxyalkylene groups. Of these, methylene, ethylene, trimethylene, propylene, tetramethylene, hexamethylene, and octamethylene are more preferred, with ethylene and trimethylene being even more preferred.

Examples of the cyclic carboxylic anhydride structure Z¹ include succinic anhydride, maleic anhydride, phthalic anhydride, cyclopentanedicarboxylic anhydride, cyclohexanedicarboxylic anhydride, norbornanedicarboxylic anhydride, and norbornenedicarboxylic anhydride structures, with the succinic anhydride structure being preferred.

In formula (I), R³ is each independently hydrogen, methyl, ethyl, n-propyl or isopropyl, with hydrogen, methyl or ethyl being preferred.

The subscripts a, b, c, d, and e are numbers satisfying: 0 ≤ a < 1, 0 < b < 1, 0 < c ≤ 0.4, 0 ≤ d < 1, 0 ≤ e < 1, and a+b+c+d+e=1.

The subscript a is a number satisfying 0 ≤ a < 1. As viewed from crack-preventing effect, a is preferably a number satisfying 0 ≤ a ≤ 0.3, more preferably a=0.

The subscript b is a number satisfying 0 < b < 1. As viewed from the mar resistance of a cured product, b is preferably a number satisfying 0.5 < b < 1.

The subscript c is a number satisfying 0 < c ≤ 0.4. As viewed from water dispersibility and stability, c is preferably a number satisfying 0.03 ≤ c ≤ 0.2.

The subscript d is a number satisfying 0 ≤ d < 1. As viewed from the curability of the composition and the hardness of a cured product, d is preferably a number satisfying 0 ≤ d ≤ 0.5, more preferably 0 ≤ d ≤ 0.2.

The subscript e is a number satisfying 0 ≤ e < 1. As viewed from the curability of the composition and the hardness of a cured product, e is preferably a number satisfying 0 ≤ e ≤ 0.5, more preferably 0 ≤ e ≤ 0.2.

The subscript f is a number satisfying 0 < f < 4. As viewed from the crosslinking density of a cured product, f is preferably a number satisfying 0 < f ≤ 2, more preferably 0.1 < f ≤ 1.1.

Component (A) has a weight average molecular weight (Mw) of preferably 1,000 to 500,000, more preferably 1,500 to 20,000, even more preferably 2,000 to 3,000 as measured by gel permeation chromatography (GPC) versus polystyrene standards. With a Mw of at least 1,000, the aqueous dispersion has improved storage stability, coatability, and film formation. With a Mw of up to 500,000, the occurrence of rugged or uneven coating is suppressed.

It is noted that the measuring conditions of GPC are, for instance, as used in Examples.

### (B) Basic compound

Examples of the basic compound as component (B) include carbonate salts of alkali metals, hydrogen carbonate salts of alkali metals, hydroxides of alkali metals, hydroxides of alkaline earth metals, and amine compounds, but are not limited thereto. The amine compounds are preferred.

Exemplary carbonate salts of alkali metals include Na₂CO₃ and K₂CO₃.

Exemplary hydrogen carbonate salts of alkali metals include NaHCO₃ and KHCO₃.

Exemplary hydroxides of alkali metals include NaOH and KOH.

Exemplary hydroxides of alkaline earth metals include Ca(OH)₂ and Mg(OH)₂.

Exemplary amine compounds include ammonia, monoethanolamine, diethanolamine, triethanolamine, benzylamine, methylbenzylamine, dimethylbenzylamine, methyldiethanolamine, dimethylethanolamine, triethylamine, tributylamine, and dibutylamine.

The basic compound is added in such an amount as to adjust the water phase at pH 7 to 10, preferably pH 7 to 9, specifically of 0.5 to 25 parts by weight per 100 parts by weight of the organopolysiloxane. At least 0.5 part by weight of the basic compound ensures good dispersibility in water and gives an aqueous dispersion having excellent stability. Up to 25 parts by weight minimizes the risk of pH biasing toward basicity. It is noted that pH is measured according to JIS Z8802 as shown in Examples later.

### (C) Water

The water used herein is not particularly limited. Deionized water at pH 6 to 8 is preferably used as viewed from the stability of the aqueous dispersion.

The amount of water added is 50 to 1,000 parts by weight per 100 parts by weight of the organopolysiloxane as component (A). With an amount of less than 50 parts by weight, the aqueous dispersion may lose stability. An amount in excess of 1,000 parts by weight may lead to the disturbance of film formation.

In the aqueous dispersion of the invention, a solvent which is miscible with water may also be used in combination. For example, alcohols such as methanol, ethanol and 2-propanol are used. When an organic solvent is used, it is preferred from the aspect of environmental load that its amount is from more than 0% by weight to 5% by weight based on the weight of the overall aqueous dispersion.

It is preferred from the aspects of stability and film formation that the content of non-volatiles in the aqueous dispersion be 5 to 70% by weight based on the overall aqueous dispersion. It is noted that the content of non-volatiles is measured according to JIS C2133 as shown in Examples later.

The aqueous dispersion of the invention may contain a surfactant. When used, as viewed from film formation, the amount of the surfactant is preferably from more than 0% by weight to 1% by weight based on the overall aqueous dispersion.

### [2] Preparation of aqueous organopolysiloxane dispersion

Although the method for preparing the aqueous organopolysiloxane dispersion is not particularly limited, the dispersion can be prepared, for example, by the method comprising steps (α), (β) and (y):
step (α) of effecting co-hydrolytic condensation of a silane mixture containing a silane compound having the formula (III) or hydrolytic condensate thereof and a silane compound having the formula (IV) to form an organopolysiloxane having at least one of a cyclic carboxylic anhydride structure and a carboxylic acid structure resulting from ring-opening thereof,

   R¹Si(OR³)₃ (III)

   R⁴Si(OR³)₃ (IV)

   wherein R¹ and R³ are as defined above, R⁴ is each independently a monovalent group having a cyclic carboxylic anhydride structure,
step (β) of mixing the organopolysiloxane having at least one of a cyclic carboxylic anhydride structure and a carboxylic acid structure resulting from ring-opening thereof, obtained in step (α), with a basic compound to form a mixture, and
step (γ) of dispersing the mixture of step (β) in water to form the aqueous organopolysiloxane dispersion.

### <Step (α)>

Step (α) is to perform co-hydrolytic condensation reaction of a silane mixture containing a silane compound having formula (III) or hydrolytic condensate thereof and a silane compound having formula (IV) to form an organopolysiloxane having at least one of a cyclic carboxylic anhydride structure and a carboxylic acid structure resulting from ring-opening thereof.

In formula (III), examples of the groups R¹ and R³ are as exemplified in conjunction with formula (I).

Examples of the silane compound having formula (III) include methyltrimethoxysilane, methyltriethoxysilane, methyltripropoxysilane, methyltributoxysilane, ethyltrimethoxysilane, ethyltriethoxysilane, propyltrimethoxysilane, propyltriethoxysilane, butyltrimethoxysilane, pentyltrimethoxysilane, hexyltrimethoxysilane, octyltrimethoxysilane, decyltrimethoxysilane, dodecyltrimethoxysilane, tetradecyltrimethoxysilane, octadecyltrimethoxysilane, cyclohexyltrimethoxysilane, cyclohexyltriethoxysilane, phenyltrimethoxysilane, phenyltriethoxysilane, vinyltrimethoxysilane, vinyltriethoxysilane, styryltrimethoxysilane, styryltriethoxysilane, 3-acryloyloxypropyltrimethoxysilane, 3-methacryloyloxypropyltriethoxysilane, 3-methacryloyloxypropyltrimethoxysilane, 3-methacryloyloxypropyltriethoxysilane, and 3,3,3-trifluoropropyltrimethoxysilane.

In formula (IV), examples of the group R³ are as exemplified in conjunction with formula (I).

In formula (IV), R⁴ is a monovalent group having a cyclic carboxylic anhydride structure, preferably a group having the formula (V).
[Chem. 5]

*-X-Z² (V)

Herein * designates a point of attachment to the silicon atom.

In formula (V), X is a C₁-C₄₀ straight or branched divalent hydrocarbon group which may contain oxygen, nitrogen, sulfur or silicon. Z² is a cyclic carboxylic anhydride structure.

In the C₁-C₄₀ divalent hydrocarbon group X, an ether bond, amide bond, urethane bond, urea bond or sulfide bong may intervene. Preferred examples include C₁-C₁₀ alkylene groups and (poly)oxyalkylene groups. Of these, methylene, ethylene, trimethylene, propylene, tetramethylene, hexamethylene, and octamethylene are more preferred, with ethylene and trimethylene being even more preferred.

Examples of the cyclic carboxylic anhydride structure Z² include succinic anhydride, maleic anhydride, phthalic anhydride, cyclopentanedicarboxylic anhydride, cyclohexanedicarboxylic anhydride, norbornanedicarboxylic anhydride, and norbornenedicarboxylic anhydride structures, with the succinic anhydride structure being preferred.

Examples of the silane compound having formula (IV) include 3-trimethoxysilylpropylsuccinic anhydride, 3-triethoxysilylpropylsuccinic anhydride, 3-trimethoxysilylpropylphthalic anhydride, 3-triethoxysilylpropylphthalic anhydride, 3-trimethoxysilylpropylcyclohexyldicarboxylic anhydride, and 3-triethoxysilylpropylcyclohexyldicarboxylic anhydride.

The amount of the silane compound having formula (IV) is up to 0.4 mole per mole of silicon atoms in the overall silane mixture, preferably 0.03 to 0.2 mole as viewed from water dispersibility and stability.

In step (α), the silane mixture subject to cohydrolytic condensation reaction may contain a silane compound other than the silane compounds having formulae (III) and (IV) or a hydrolytic condensate thereof. Examples of the other silane compound include tetramethoxysilane, tetraethoxysilane, tetraisopropoxysilane, tetrabutoxysilane, dimethyldimethoxysilane, dimethyldiethoxysilane, phenylmethyldimethoxysilane, phenylmethyldiethoxysilane, diphenyldimethoxysilane, diphenyldiethoxysilane, trimethylmethoxysilane, trimethylethoxysilane, dimethylphenylmethoxysilane, dimethylphenylethoxysilane, and hydrolytic condensates thereof.

The conditions for hydrolytic condensation reaction are, for example, at 20 to 150°C for about 0.5 to 6 hours, preferably at 20 to 100°C for about 1 to 4 hours, though not limited thereto.

A solvent may be added if necessary. Exemplary solvents include alcohol solvents such as methanol, ethanol and isopropyl alcohol, ketone solvents such as ethyl ethyl ketone and methyl isobutyl ketone, and aromatic nonpolar solvents such as benzene, toluene and xylene.

Also, an acidic catalyst may be used to promote the hydrolytic reaction. Strong acids are preferred as the acidic catalyst although the acid is not limited to a particular type. For example, sulfuric acid, methanesulfonic acid and trifluoromethanesulfonic acid are preferably used. In particular, a cation exchange resin having such an exchange group is preferred because of ease of post-treatment.

The amount of the acidic catalyst added is preferably 100 to 10,000 ppm, more preferably 500 to 3,000 ppm based on the total weight of the silane mixture.

The hydrolytic reaction may be followed by vacuum distillation. From the aspect of stability, the conditions for vacuum distillation are preferably at 20 to 120°C for about 0.5 to 4 hours, though not limited thereto.

### <Step (β)>

Step (β) is to mix the organopolysiloxane having at least one of a cyclic carboxylic anhydride structure and a carboxylic acid structure resulting from ring-opening thereof, obtained in step (α), with a basic compound to form a mixture.

Examples of the basic compound are as exemplified for component (B).

The conditions for mixing are, for example, preferably at 20 to 70°C for 5 minutes to 4 hours, more preferably at 20 to 60°C for 10 minutes to 2 hours, though not limited thereto.

The amount of the basic compound added is to adjust the water phase after step (γ) at pH 7 to 10, preferably pH 7 to 9, and specifically 0.5 to 25 parts by weight per 100 parts by weight of the organopolysiloxane. As long as the amount is 0.5 part by weight or more, an aqueous dispersion having improved dispersibility in water and stability is obtained. As long as the amount is 25 parts by weight or less, the risk of pH biasing toward basicity is minimized.

### <Step (γ)>

Step (γ) is to disperse the mixture of step (β) in water to form the aqueous organopolysiloxane dispersion.

The dispersing means is not particularly limited and any well-known dispersing means may be employed. For example, a paint shaker, ball mill or homogenizer may be used at 20 to 80°C.

The amount of water used is 50 to 1,000 parts by weight per 100 parts by weight of the organopolysiloxane obtained in step (α). With less than 50 parts by weight, the aqueous dispersion may lose stability. An amount in excess of 1,000 parts by weight may disturb film formation.

Also, step (γ) may be followed by vacuum distillation. By vacuum distillation, the amounts of by-product alcohols and unreacted low-molecular-weight components in the system can be reduced. From the aspect of stability, the conditions for vacuum distillation are preferably at 20 to 120°C for about 0.5 to 4 hours, though not limited thereto.

### [3] Curable silicone composition and coating agent

Since the aqueous organopolysiloxane dispersion cures at room temperature or elevated temperature to form a coating having solvent resistance, it can be used as a curable silicone composition and a coating agent. The dispersion can be advantageously used, for example, as exterior wall paints and paint primers although its application is not limited thereto. As used herein, "room temperature" means a normal temperature without heating or cooling, and typically refers to the temperature range of 0 to 40°C, preferably 5 to 35°C.

The curable silicone composition and coating agent of the invention may contain an aqueous organic resin. Examples of the aqueous organic resin include aqueous acrylic resins, aqueous urethane resins, aqueous epoxy resins, aqueous PVA resins, aqueous polyester resins, aqueous alkyd resins, aqueous melamine resins, and aqueous fluoro-resins, but are not limited thereto.

### [4] Cured product of curable silicone composition and coated article

The invention also provides a coated article comprising a substrate and a cured product of the curable silicone composition formed on at least one surface of the substrate directly or via at least one other layer. It is obtained by coating the curable silicone composition to at least one surface of a substrate directly or via at least one other layer, and curing the composition to form a coating.

Examples of the substrate include glass, silicon wafers, metals, plastic molded bodies, ceramics, and composites thereof, but are not limited thereto.

Also included are the foregoing substrates whose surface is subjected to chemical treatment, corona discharge treatment, plasma treatment or treatment with acid or alkaline solution, and decorative laminates including a substrate having a surface layer covered with a coating of different type. Examples of the other layer include layers obtained by polyester resin coating, polyurethane resin coating, aminoalkyd resin coating, lacquer coating, spray coating, and aqueous wax coating.

The method of coating the curable silicone composition to the substrate may be selected from well-known coating methods, for example, roll coating, bar coating, wire bar coating, spray coating, flow coating, spin coating, curtain coating, knife coating, dip coating, and brush coating. The coating weight, though not particularly limited, is typically such that the film after drying may have a thickness of 0.1 to 1,000 µm, preferably 1 to 100 µm.

The method of curing the curable silicone composition may be room temperature curing, heat curing or the like. Although the heating temperature is not particularly limited, the composition is cured at 80 to 150°C for a short time of about 5 to 60 minutes into a transparent cured product. Even when the cured product is post-cured at 150 to 180°C for about 30 minutes to 3 hours, the product maintains superior transparency without discoloration.

### EXAMPLES

Synthesis Examples, Examples and Comparative Examples are shown below by way of illustration and not by way of limitation.

The average composition of an organopolysiloxane is computed from the integrated values of ¹H-NMR and ²⁹Si-NMR spectroscopy using a NMR spectrometer of JEOL Ltd. The weight average molecular weight (Mw) is measured by gel permeation chromatography (GPC) versus polystyrene standards under the following conditions.

### [GPC conditions]

| | |
|---|---|
| Analyzer: | HLC-8220 (Tosoh Corp.) |
| Column: | TSKgel GMHXL-L, TSKgel G4000HXL, TSKgel G2000HXL ×2 |
| Developing solvent: | tetrahydrofuran (THF) |
| Flow rate: | 1 mL/min |
| Detector: | RI |
| Column thermostatic chamber temperature: | 40°C |
| Standards: | polystyrene |

### [1] Preparation of organopolysiloxane

### [Synthesis Example 1]

A 500-mL separable flask equipped with a stirrer, reflux condenser, dropping funnel and thermometer was charged with 16.2 g (0.1 mol) of hexamethyldisiloxane (Tokyo Chemical Industry Co., Ltd.), 123.8 g (0.8 mol) of methyltrimethoxysilane (KBM-13 by Shin-Etsu Chemical Co., Ltd.), 7.9 g (0.03 mol) of 3-trimethoxysilylpropylsuccinic anhydride (X-12-967C by Shin-Etsu Chemical Co., Ltd.), and 15 g of isopropyl alcohol (IPA), which were stirred until uniform. At this point of time, 30 g of deionized water was added, followed by stirring at 80°C for 2 hours. The alcohol was removed by vacuum distillation (50°C, 120 mmHg), leaving a high viscosity liquid. The organopolysiloxane in the liquid had a Mw of 2,500 and was represented by formula (I) wherein a=0, b=0.78, c=0.03, d=0, e=0.19, and f=0.2.

### [Synthesis Example 2]

A high viscosity liquid was obtained by the same procedure as in Synthesis Example 1 except that hexamethyldisiloxane was changed to 12.2 g (0.1 mol) of dimethyldimethoxysilane (Tokyo Chemical Industry Co., Ltd.). The organopolysiloxane in the liquid had a Mw of 3,000 and was represented by formula (I) wherein a=0, b=0.86, c=0.03, d=0.11, e=0, and f=0.3.

### [Synthesis Example 3]

A 500-mL separable flask equipped with a stirrer, reflux condenser, dropping funnel and thermometer was charged with 108.4 g (0.7 mol) of methyltrimethoxysilane (KBM-13 by Shin-Etsu Chemical Co., Ltd.), 10.5 g (0.05 mol) of 3-trimethoxysilylpropylsuccinic anhydride (X-12-967C by Shin-Etsu Chemical Co., Ltd.), and 17 g of IPA, which were stirred until uniform. At this point of time, 30 g of deionized water was added. After stirring at 80°C for 2 hours, 39.7 g (0.2 mol) of phenyltrimethoxysilane (Shin-Etsu Chemical Co., Ltd.) was added. The alcohol was removed by vacuum distillation (50°C, 120 mmHg), leaving a high viscosity liquid. The organopolysiloxane in the liquid had a Mw of 2,200 and was represented by formula (I) wherein a=0, b=0.95, c=0.05, d=0, e=0, and f=0.5.

### [Synthesis Example 4]

A 500-mL separable flask equipped with a stirrer, reflux condenser, dropping funnel and thermometer was charged with 10.6 g (0.07 mol) of hexamethyldisiloxane (Tokyo Chemical Industry Co., Ltd.), 80.5 g (0.56 mol) of methyltrimethoxysilane (KBM-13 by Shin-Etsu Chemical Co., Ltd.), 37.5 g (0.14 mol) of 3-trimethoxysilylpropylsuccinic anhydride (X-12-967C by Shin-Etsu Chemical Co., Ltd.), and 15 g of IPA, which were stirred until uniform. At this point of time, 30 g of deionized water was added, followed by stirring at 80°C for 2 hours. The alcohol was removed by vacuum distillation (50°C, 120 mmHg), leaving a high viscosity liquid. The organopolysiloxane in the liquid had a Mw of 2,500 and was represented by formula (I) wherein a=0, b=0.67, c=0.16, d=0, e=0.17, and f=0.4.

### [Synthesis Example 5]

A 500-mL separable flask equipped with a stirrer, reflux condenser, dropping funnel and thermometer was charged with 12.0 g (0.1 mol) of dimethyldimethoxysilane (Tokyo Chemical Industry Co., Ltd.), 39.7 g (0.2 mol) of phenyltrimethoxysilane (KBM-103 by Shin-Etsu Chemical Co., Ltd.), 17.4 g (0.05 mol) of a compound having the formula (1) shown below, and 15 g of IPA, which were stirred until uniform. At this point of time, 10 g of deionized water was added, followed by stirring at 80°C for 2 hours. The alcohol was removed by vacuum distillation (50°C, 120 mmHg), leaving a high viscosity liquid. The organopolysiloxane in the liquid had a Mw of 1,500 and was represented by formula (I) wherein a=0, b=0.55, c=0.14, d=0.21, e=0, and f=0.4.

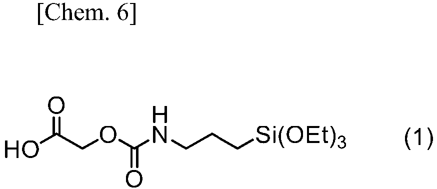

Herein Et stands for ethyl.

### [Comparative Synthesis Example 1]

A 500-mL separable flask equipped with a stirrer, reflux condenser, dropping funnel and thermometer was charged with 19.5 g (0.12 mol) of hexamethyldisiloxane (Tokyo Chemical Industry Co., Ltd.), 148.6 g (0.96 mol) of methyltrimethoxysilane (KBM-13 by Shin-Etsu Chemical Co., Ltd.), and 17 g of IPA, which were stirred until uniform. At this point of time, 35 g of deionized water was added, followed by stirring at 80°C for 2 hours. The alcohol was removed by vacuum distillation (50°C, 120 mmHg), leaving a high viscosity liquid. The organopolysiloxane in the liquid had a Mw of 2,500 and was represented by formula (I) wherein a=0, b=0.80, c=0, d=0, e=0.20, and f=0.3.

### [Comparative Synthesis Example 2]

A 500-mL separable flask equipped with a stirrer, reflux condenser, dropping funnel and thermometer was charged with 16.2 g (0.1 mol) of hexamethyldisiloxane (Tokyo Chemical Industry Co., Ltd.), 123.8 g (0.8 mol) of methyltrimethoxysilane (KBM-13 by Shin-Etsu Chemical Co., Ltd.), 25.7 g (0.05 mol) of 50% methanol solution of trimethyl[3-(trimethoxysilyl)propyl]ammonium chloride (Tokyo Chemical Industry Co., Ltd.), and 15 g of IPA, which were stirred until uniform. At this point of time, 30 g of 1N hydrochloric acid was added. After stirring at 80°C for 2 hours, 5 g (0.08 mol) of propylene oxide was added. The alcohol was removed by vacuum distillation (50°C, 120 mmHg), leaving a high viscosity liquid. The organopolysiloxane in the liquid had a Mw of 2,900 and was represented by formula (I) wherein a=0, b=0.78, c=0, d=0, e=0.19, and f=0.2.

### [2] Preparation of curable silicone composition (aqueous organopolysiloxane dispersion)

### [Examples 1-1 to 1-8 and Comparative Examples 1-1 to 1-8]

A curable silicone composition was prepared by combining each of the organopolysiloxanes obtained in Synthesis Examples 1 to 5 and Comparative Synthesis Examples 1 and 2 with a basic compound in the amounts (parts by weight) shown in Tables 1 and 2, stirring at 25°C for 30 minutes, adding and mixing a diluent solvent, and effecting vacuum distillation (50°C, 140 mmHg) for 2 hours.

The curable silicone compositions thus obtained were measured for nonvolatile content, pH, outer appearance, and stability by the following tests. The results are also shown in Tables 1 and 2.
(1) Nonvolatile content
   measured according to JIS C2133
(2) pH
   measured according to JIS Z8802
(3) Outer appearance
   The composition was sealed in a container and allowed to stand at 25°C for 24 hours. A sample which was observed to undergo definite separation or insolubilization was rated Reject (×) whereas a sample which maintained uniform dispersion without separation was rated Pass (○).
(4) Stability

The composition was sealed in a container and allowed to stand at 50°C for 3 days. A sample which was observed to undergo neither outstanding viscosity buildup nor gelation was rated Pass (○) whereas a sample which was observed to undergo an outstanding viscosity buildup or gelation was rated Reject (×).

**[Table 1]**

| Formulation (pbw) | | Example | | | | | | | |
|---|---|---|---|---|---|---|---|---|---|
| | | 1-1 | 1-2 | 1-3 | 1-4 | 1-5 | 1-6 | 1-7 | 1-8 |
| (A) Organopolysiloxane (as solids) | Synthesis Example 1 | 100 | | | | 100 | 100 | 100 | |
| | Synthesis Example 2 | | 100 | | | | | | |
| | Synthesis Example 3 | | | 100 | | | | | |
| | Synthesis Example 4 | | | | 100 | | | | |
| | Synthesis Example 5 | | | | | | | | 100 |
| (B) Basic compound | triethylamine | 4 | 3 | 10 | 25 | | | | 8 |
| | ammonia | | | | | 0.5 | | | |
| | diethanolamine | | | | | | 5 | | |
| | sodium hydrogencarbonate | | | | | | | 4 | |
| (C) Diluent solvent | water | 200 | 100 | 300 | 900 | 200 | 200 | 200 | 200 |
| Nonvolatile content | | 30% | 50% | 27% | 10% | 65% | 30% | 30% | 30% |
| pH | | 7.8 | 7.7 | 8.2 | 7.9 | 7.2 | 9.1 | 7.2 | 8.1 |
| Appearance | | ○ | ○ | ○ | ○ | ○ | ○ | ○ | ○ |
| Stability | | ○ | ○ | ○ | ○ | ○ | ○ | ○ | ○ |

**[Table 2]**

| Formulation (pbw) | | Comparative Example | | | | | | | |
|---|---|---|---|---|---|---|---|---|---|
| | | 1-1 | 1-2 | 1-3 | 1-4 | 1-5 | 1-6 | 1-7 | 1-8 |
| (A) Organopolysiloxane (as solids) | Synthesis Example 1 | | 100 | 100 | 400 | 100 | 100 | | |
| | Comparative Synthesis Example 1 | 100 | | | | | | 100 | |
| | Comparative Synthesis Example 2 | | | | | | | | 100 |
| (B) Basic compound | triethylamine | 4 | 0.1 | 40 | 4 | 4 | | | |
| (C) Diluent solvent | water | 200 | 200 | 200 | 25 | | | | 200 |
| | MIBK | | | | | 200 | 100 | 100 | |
| Nonvolatile content | | 30% | 30% | 30% | 80% | 30% | 50% | 50% | 30% |
| pH | | 11.5 | 6.2 | 11.2 | 7.8 | 7.8 | 6.0 | 7.8 | 7.0 |
| Appearance | | × | × | ○ | ○ | ○ | ○ | ○ | ○ |
| Stability | | N/A | N/A | × | × | × | ○ | ○ | ○ |

### [3] Preparation of coated article

### [Examples 2-1 to 2-8 and Comparative Examples 2-1 to 2-8]

Each of the aqueous organopolysiloxane dispersions obtained in Examples 1-1 to 1-8 and Comparative Examples 1-3, 1-4 and 1-8 and the MIBK solutions of organopolysiloxane obtained in Comparative Examples 1-6 and 1-7 was applied onto an aluminum substrate by flow coating.

The coating was dried at 100°C for 10 minutes and allowed to stand at 25°C for 3 days for curing, obtaining a coated article having a cured film on the aluminum substrate surface. The coated article was subjected to a rubbing test and pencil hardness measurement by the following procedures. The results are shown in Table 3.

### (1) Rubbing test

A piece of Bemcot M-311 (Asahi Kasei Corp., area 4 cm²) was immersed in acetone or toluene. The coated article was rubbed with the piece under a load of 500 g over 30 reciprocal cycles. By visual observation, the coating was evaluated for outer appearance. The sample in which coating outer appearance remained unchanged from the initial after both the acetone and toluene rubbing tests was rated Pass (○), the sample in which coating outer appearance remained unchanged from the initial after the toluene rubbing test and in which coating peeling or whitening was observed after the acetone rubbing test was rated mediocre (△), and the sample in which coating peeling or whitening was observed after both the acetone and toluene rubbing tests was rated Reject (×).

### (2) Pencil hardness

Pencil hardness was measured according to JIS K5600-5-4 under a load of 750 g. It is noted that the sample which was flawed with 6B pencil was marked <6B.

**[Table 3]**

| | Composition | Rubbing test | Pencil hardness |
|---|---|---|---|
| Example 2-1 | Example 1-1 | ○ | B |
| Example 2-2 | Example 1-2 | ○ | HB |
| Example 2-3 | Example 1-3 | ○ | B |
| Example 2-4 | Example 1-4 | ○ | H |
| Example 2-5 | Example 1-5 | ○ | 3B |
| Example 2-6 | Example 1-6 | ○ | 2B |
| Example 2-7 | Example 1-7 | △ | 4B |
| Example 2-8 | Example 1-8 | △ | 4B |
| Comparative Example 2-1 | Comparative Example 1-3 | ○ | 2H |
| Comparative Example 2-2 | Comparative Example 1-4 | ○ | B |
| Comparative Example 2-3 | Comparative Example 1-5 | ○ | B |
| Comparative Example 2-4 | Comparative Example 1-6 | × | <6B |
| Comparative Example 2-5 | Comparative Example 1-7 | × | <6B |
| Comparative Example 2-6 | Comparative Example 1-8 | × | 6B |

As is evident from Tables 1 to 3, the curable silicone compositions (or aqueous organopolysiloxane dispersions) of Examples 1-1 to 1-8 remain stably dispersed in water and their cured films have satisfactory solvent resistance.

In contrast, no water dispersions were obtained in Comparative Example 1-1 in which the organopolysiloxane was changed to the one not having a carboxylic anhydride and carboxylic acid structure and Comparative Example 1-2 exhibiting a pH value of less than 7 because of the small amount of the basic compound.

In Comparative Example 1-3 exhibiting a pH value in excess of 10 and Comparative Example 1-4 with a less amount of water, the stability of the water dispersion is poor although the solvent resistance and hardness of the cured film are acceptable. In Comparative Example 1-5 which uses MIBK instead of water in Example 1-1, liquid stability is poor despite no problems of the cured film.

In Comparative Examples 1-6 and 1-7 which are MIBK solutions of organopolysiloxane not containing the basic compound, although liquid stability is acceptable, the films are under-cured and show inferior solvent resistance and hardness.

In Comparative Example 1-8, the aqueous dispersion of organopolysiloxane having a quaternary ammonium salt structure is less curable despite high liquid stability, and the film has poor solvent resistance and low hardness.

## Claims

1. An aqueous organopolysiloxane dispersion comprising
(A) 100 parts by weight of an organopolysiloxane having the formula (I),
(B) a basic compound in an amount to adjust the dispersion at pH 7 to 10, and
(C) 50 to 1,000 parts by weight of water,
[Chem. 1]
(SiO_{4/2})ₐ(R¹SiO_{3/2})_{b}(R²SiO_{3/2})_{c}(R¹₂SiO_{2/2})_{d}(R¹₃SiO_{1/2})ₑ(R³O_{1/2})_{f} (I)
wherein R¹ is each independently hydrogen, or a C₁-C₁₂ monovalent saturated hydrocarbon group, C₂-C₁₂ organic group having a radically polymerizable functional group, C₆-C₁₈ aryl group or C₇-C₂₀ aralkyl group, which may be substituted with halogen, R² is each independently a monovalent group having a carboxylic anhydride, carboxylic acid or carboxylate structure, R³ is each independently hydrogen, methyl, ethyl, n-propyl or isopropyl, a, b, c, d, and e are numbers satisfying: 0 ≤ a < 1, 0 < b < 1, 0 < c ≤ 0.4, 0 ≤ d < 1, 0 ≤ e < 1, and a+b+c+d+e=1, and f is a number satisfying 0 < f < 4.

2. The aqueous organopolysiloxane dispersion of claim 1 wherein R² is a monovalent group having a succinic anhydride, succinic acid or succinate structure.

3. The aqueous organopolysiloxane dispersion of claim 1 wherein in formula (I), b, d and e satisfy 0.5 ≤ b < 1, 0 ≤ d < 0.5 and 0 ≤ e < 0.5.

4. The aqueous organopolysiloxane dispersion of claim 1 wherein component (A) has a weight average molecular weight (Mw) of 1,000 to 500,000 as measured by gel permeation chromatography versus polystyrene standards.

5. The aqueous organopolysiloxane dispersion of claim 1 wherein the basic compound as component (B) is an amine compound.

6. The aqueous organopolysiloxane dispersion of claim 1 wherein a surfactant is present in an amount of up to 1% by weight of the overall weight.

7. The aqueous organopolysiloxane dispersion of claim 1 wherein an organic solvent is present in an amount of up to 5% by weight of the overall weight.

8. A method for preparing the aqueous organopolysiloxane dispersion of any one of claims 1 to 7, the method comprising steps (α) to (y):
step (α) of effecting co-hydrolytic condensation of a silane mixture containing a silane compound having the formula (III) or hydrolytic condensate thereof and a silane compound having the formula (IV) to form an organopolysiloxane having at least one of a cyclic carboxylic anhydride structure and a carboxylic acid structure resulting from ring-opening thereof,
R¹Si(OR³)₃ (III)
R⁴Si(OR³)₃ (IV)
wherein R¹ and R³ are as defined above, R⁴ is each independently a monovalent group having a cyclic carboxylic anhydride structure,
step (β) of mixing the organopolysiloxane having at least one of a cyclic carboxylic anhydride structure and a carboxylic acid structure resulting from ring-opening thereof, obtained in step (α), with a basic compound to form a mixture, and
step (γ) of dispersing the mixture of step (β) in water to form the aqueous organopolysiloxane dispersion.

9. A curable silicone composition comprising the aqueous organopolysiloxane dispersion of any one of claims 1 to 7.

10. A coating agent comprising the aqueous organopolysiloxane dispersion of any one of claims 1 to 7.

11. A cured product of the curable silicone composition of claim 9.

12. A coated article comprising a substrate and the cured product of claim 11 formed on at least one surface of the substrate directly or via at least one other layer.
